# EUROPEAN PATENT SPECIFICATION

(11) **EP 3 431 523 B1**
(45) Date of publication and mention of the grant of the patent: **23.09.2020**
(21) Application number: 17766525.4
(22) Date of filing: 09.03.2017
(51) Int. Cl.: C08G 63/672

(54) **POLYESTER RESIN**
POLYESTERHARZ
RÉSINE POLYESTER

(30) Priority: 15.03.2016 JP 2016050879
(43) Date of publication of application: 23.01.2019
(73) Proprietor: Mitsubishi Gas Chemical Company, Inc., Tokyo 100-8324 (JP)
(72) Inventor: HIROKANE, Takeshi, Tokyo 100-8324 (JP); MORISHITA, Takami, Hiratsuka-shi Kanagawa 254-0016 (JP); ISHII, Kentaro, Hiratsuka-shi Kanagawa 254-0016 (JP)
(74) Representative: Vossius & Partner Patentanwälte Rechtsanwälte mbB
(86) International application number: PCT/JP2017/009402
(87) International publication number: WO 2017/159524

(56) References cited:
- JP-A- 2000 007 678
- JP-A- 2000 007 681
- JP-A- 2000 034 290
- JP-A- 2005 187 425
- JP-A- 2005 330 207
- JP-A- 2011 074 000
- JP-A- 2012 116 921
- JP-A- 2012 512 936
- JP-A- 2013 018 863
- US-A- 2 945 008

## Description

### Technical Field

The present invention relates to polyester resins.

### Background Art

Aromatic saturated polyester resins, especially polyethylene terephthalate (hereinafter, also referred to as "PET"), are well balanced in properties, such as mechanical performance, solvent resistance, aroma retaining property, weather resistance and recyclability, and have been used mainly for the application to produce products, such as bottles and films, in a large scale. However, PET has disadvantages with respect to crystallinity and heat resistance. That is, PET is high in crystallinity, and hence when an attempt to produce a thick molded article or sheet is made, whitening occurs due to crystallization, which impairs transparency. In addition, as for the heat resistance, the glass transition temperature of PET is approximately 80°C, and hence it has been impossible to utilize PET for applications requiring high heat resistance and transparency, such as products used in vehicles, packaging materials for import and export, packaging materials onto which retorting or heating with microwave oven is performed, and feeding bottles or tableware onto which heat sterilization is performed.

From the viewpoint of solving such problems, polyester resins obtained by copolymerizing 3,9-bis(1,1-dimethyl-2-hydroxyethyl)-2,4,8,10-tetraoxaspiro[5.5]undecane (hereinafter, also referred to as "spiro glycol") with a dicarboxylic acid component are disclosed as a polyester resin excellent in heat resistance, transparency and mechanical performance (e.g., see Patent Literature 1). US 2 945 008 discloses as well the synthesis of a polyester (from recrystallized spiro-glycol having from 50 to 100 mole percent of spiro-glycol. A method for producing spiro glycol having thermal stability such that it is difficult to be decomposed upon heating is also disclosed (e.g., see Patent Literature 2).

### Citation List

### Patent Literature

Patent Literature 1: Japanese Patent Laid-Open No. 2002-69165
Patent Literature 2: Japanese Patent Laid-Open No. 2005-187425

### Summary of Invention

### Technical Problem

However, it has been found that although the polyester resin disclosed in Patent Literature 1 that includes spiro glycol as a diol structural unit has superior non-crystallinity and heat resistance, as well as mechanical properties, such as tensile strength, compared to other polyester resins, there is still room for improvement in its 50% failure energy. Due to further investigation made by the present inventors on this point, it has been revealed that the decline in the 50% failure energy is not caused by the thermal decomposition of spiro glycol, as disclosed in Patent Literature 2.

The present invention has been made in consideration of the problems described above, and its object is to provide a polyester resin with a high 50% failure energy.

### Solution to Problem

The present inventors have performed diligent research in order to solve said problems. As a result, it has been revealed that the decline in the 50% failure energy is due to increase the number of crosslinking points in the polyester resin. Then, it has been found that the problems described above may be solved by decreasing the number of crosslinking points in the polyester resin, thereby achieving the present invention.

Accordingly, the present invention is as described in the claims.

### Advantageous Effects of Invention

According to the present invention, a polyester resin with a high 50% failure energy may be provided. Description of Embodiments

Hereinafter, a mode for carrying out the present invention (hereinafter simply referred to as "the present embodiment") will be described in detail. The present embodiment described below is provided for illustrative purposes, and it is not intended that the present invention be limited only to the content described below. The present invention can be suitably modified and then practiced within the scope of the present invention.

### [Polyester Resin]

A polyester resin according to the present embodiment comprises a diol structural unit and a dicarboxylic acid structural unit, wherein the diol structural unit comprises a structural unit derived from a diol having a cyclic acetal skeleton represented by Formula (1) and/or Formula (2) below; the content of the structural unit derived from a diol having a cyclic acetal skeleton is 1 to 80 mol% based on the total amount of the diol structural unit; and the amount of crosslinking points in the resin chain is 1.0 wt% or less; 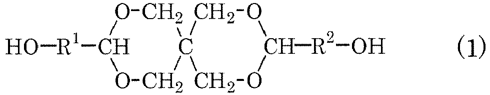 wherein R¹ and R² each independently represent an organic group selected from the group consisting of aliphatic groups having 1 to 10 carbon atoms, alicyclic groups having 3 to 10 carbon atoms, and aromatic groups having 6 to 10 carbon atoms, and 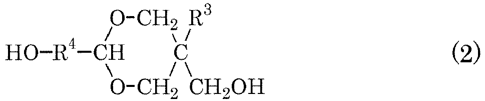 wherein R³ and R⁴ each independently represent an organic group selected from the group consisting of aliphatic groups having 1 to 10 carbon atoms, alicyclic groups having 3 to 10 carbon atoms, and aromatic groups having 6 to 10 carbon atoms.

### [Diol Structural Unit]

The diol structural unit includes a structural unit derived from a diol having a cyclic acetal skeleton represented by Formula (1) and/or Formula (2), and may also include a structural unit derived from other diols, as needed.

### (Diol Having Cyclic Acetal Skeleton)

The diol having a cyclic acetal skeleton is not particularly limited, as long as it is a compound represented by Formula (1) and/or Formula (2), but above all, particularly preferred is 3,9-bis(1,1-dimethyl-2-hydroxyethyl)-2,4,8,10-tetraoxaspiro[5.5]undecane (hereinafter, also referred to as "spiro glycol") or 5-methylol-5-ethyl-2-(1,1-dimethyl-2-hydroxyethyl)-1,3-dioxane (hereinafter, also referred to as "dioxane glycol"). Due to the inclusion of such a structural unit derived from a diol having a cyclic acetal skeleton, the 50% failure energy is further improved, and the non-crystallinity or heat resistance tends to be improved, as well. The diol having a cyclic acetal skeleton may be used singly, or two or more of them may be used in combination.

The content of the structural unit derived from the diol having a cyclic acetal skeleton is 1 to 80 mol%, preferably 3 to 60 mol%, more preferably 5 to 55 mol%, and further preferably 10 to 50 mol% based on the total amount of the diol structural unit. By making the content of the structural unit derived from the diol having a cyclic acetal skeleton within the range described above, the 50% failure energy is further improved, and the non-crystallinity and heat resistance tend to be improved, as well.

### (Other Diols)

Examples of other diols include, but are not particularly limited to, aliphatic diols, such as ethylene glycol, trimethylene glycol, 1,4-butanediol, 1,5-pentanediol, 1,6-hexanediol, diethylene glycol, propylene glycol and neopentyl glycol; polyether diols, such as polyethylene glycol, polypropylene glycol and polybutylene glycol; alicyclic diols, such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralindimethanol, norbornanedimethanol, tricyclodecanedimethanol and pentacyclododecanedimethanol; bisphenols, such as 4,4'-(1-methylethylidene)bisphenol, methylenebisphenol (also known as bisphenol F), 4,4'-cyclohexylidenebisphenol (also known as bisphenol Z) and 4,4'-sulfonylbisphenol

(also known as bisphenol S); alkylene oxide adducts of the bisphenols described above; aromatic dihydroxy compounds, such as hydroquinone, resorcin, 4,4'-dihydroxybiphenyl, 4,4'-dihydroxydiphenyl ether and 4,4'-dihydroxydiphenyl benzophenone; and alkylene oxide adducts of the aromatic dihydroxy compounds described above.

Above all, from the viewpoint of the mechanical performance, economic efficiency and the like of the polyester resin, ethylene glycol, diethylene glycol, trimethylene glycol, 1,4-butanediol and 1,4-cyclohexanedimethanol are preferred, and ethylene glycol is particularly preferred. Other diols may be used singly, or two or more of them may be used in combination.

The content of the structural unit derived from other diols is 20 to 99 mol%, preferably 40 to 97 mol%, more preferably 45 to 95 mol%, and further preferably 50 to 90 mol% based on the total amount of the diol structural unit. By making the content of the structural unit derived from other diols within the range described above, the 50% failure energy is further improved, and the non-crystallinity and heat resistance tend to be improved, as well.

### [Dicarboxylic Acid Structural Unit]

Examples of the dicarboxylic acid structural unit include, but are not particularly limited to, aliphatic dicarboxylic acids, such as succinic acid, glutaric acid, adipic acid, pimelic acid, suberic acid, azelaic acid, sebacic acid, dodecanedicarboxylic acid, cyclohexanedicarboxylic acid, decanedicarboxylic acid, norbornanedicarboxylic acid, tricyclodecanedicarboxylic acid and pentacyclododecanedicarboxylic acid; and aromatic dicarboxylic acids, such as terephthalic acid, isophthalic acid, phthalic acid, 2-methylterephthalic acid, 1,4-naphthalenedicarboxylic acid, 1,5-naphthalenedicarboxylic acid, 2,6-naphthalenedicarboxylic acid, 2,7-naphthalenedicarboxylic acid, biphenyldicarboxylic acid and tetralin dicarboxylic acid. Above all, from the viewpoint of the mechanical performance and heat resistance of the polyester resin, aromatic dicarboxylic acids, such as terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid are preferred, and terephthalic acid, 2,6-naphthalenedicarboxylic acid and isophthalic acid are particularly preferred. Among them, from the viewpoint of the economic efficiency, terephthalic acid is most preferred. Dicarboxylic acids may be used singly or two or more of them may be used in combination.

### [Amount of Crosslinking Points]

The amount of crosslinking points in the resin chain of the polyester resin according to the present embodiment is 1.0 wt% or less, preferably 0.7 wt% or less, and more preferably 0.6 wt% or less. The lower limit of crosslinking points in the resin chain is not particularly limited, but is preferably 0 wt%. By making the amount of crosslinking points 1.0 wt% or less, the 50% failure energy is further improved.

"The amount of crosslinking points" in the polyester resin in the present embodiment refers to the sum of the mass of structural unit derived from dioxane triol (hereinafter, also referred to as "DOT"), which is produced by the reaction of one hydroxypivalaldehyde (hereinafter, also referred to as "HPA") with pentaerythritol (hereinafter, also referred to as "PE"), and the mass of structural unit derived from trimethylolpropane (hereinafter, also referred to as "TMP"), with respect to the total amount of the polyester resin.

The mass of the structural units derived from DOT and TMP in the polyester resin may be determined by using gas chromatography (GC) after depolymerization or hydrolysis of the polyester resin.

The depolymerization may be performed with monoalcohols, such as methanol. The GC measurement may be performed with, for example, GC 353 manufactured by GL Sciences Inc., using TC 17 as a column and FID as a detector. Examples of methods for making the amount of crosslinking points in the polyester resin within the range described above include, but are not particularly limited to, a method of using purified HPA or a method of using spiro glycol and dioxane glycol with reduced impurities as raw materials through enhancing washing after the synthesis of spiro glycol and dioxane glycol, etc.

The structural units derived from DOT and TMP cause introduction of branching points into the linear polyester resin, thereby leading to the increase in the number of crosslinking points. However, it has been found that, in the case of a polyester resin that includes a structural unit derived from a diol having a conventional cyclic acetal skeleton, that polyester resin inevitably includes structural units derived from DOT and TMP due to the presence of the diol having a conventional cyclic acetal skeleton as a raw material. On the other hand, in the polyester resin according to the present embodiment, the use of the diol having a cyclic acetal skeleton in which the content of DOT and TMP is not more than a certain amount in the molecule allows the 50% failure energy to be further improved. This point will be explained from now on.

First of all, as a representative example of diols having a cyclic acetal skeleton represented by Formula (1), the case of spiro glycol will be used as an example and described. Spiro glycol may be synthesized, for example, via the acetalization reaction between HPA and PE in an aqueous solution under the presence of an acid catalyst. Then, crystals of spiro glycol that have precipitated during the reaction may be purified through steps of filtration, water washing and drying, thereby isolating spiro glycol.

During the reaction described above, dioxane triol (DOT), which is produced via the reaction between PE and one HPA, is relatively readily produced, and it may get mixed into spiro glycol. DOT becomes crosslinking points in the polyester resin chain, and becomes a cause to decrease the mechanical strength, especially 50% failure energy (impact resistance) of the polyester resin. To efficiently remove DOT, washing with warm water is effective.

Next, as a representative example of diols having a cyclic acetal skeleton represented by Formula (2), the case of dioxane glycol will be used as an example and described. Dioxane glycol may be synthesized, for example, via the acetalization reaction between HPA and TMP in an aqueous solution under the presence of an acid catalyst. Then, crystals of dioxane glycol that have precipitated during the reaction may be purified through steps of filtration, water washing and drying, thereby isolating dioxane glycol.

During the reaction described above, TMP that has not undergone the reaction may get mixed into dioxane glycol. TMP becomes crosslinking points in the polyester resin chain, and becomes a cause to decrease the mechanical strength, especially 50% failure energy (impact resistance) of the polyester resin. To efficiently remove TMP, washing with warm water is effective.

As described above, in the case of diols having a cyclic acetal skeleton represented by Formula (1) and Formula (2), DOT and TMP may get mixed inevitably. On the other hand, in the present embodiment, the amount of DOT and TMP that are got mixed may be lowered by synthesizing and filtrating spiro glycol and dioxane glycol, followed by washing them with water at room temperature to 70°C. Note that the temperature of water be preferably 30 to 60°C, and more preferably 40 to 55°C. By making the water temperature as such, impurities that are got mixed inevitably tend to be removed efficiently. Washing with hot water means, after the synthesis of SPG or DOG, flushing the filter cake with hot water. By raising the water temperature, thereby lowering the viscosity and increasing the fluidity of water, impurities in the cake, such as DOT or TMP, may be removed efficiently. Moreover, by utilizing the difference between the solubility of SPG or DOG and the solubility of DOT or TMP to hot water, impurities, such as DOT or TMP, are removed efficiently.

The amount of water used for the washing of SPG or DOG is preferably 3 to 30 times, more preferably 5 to 20 times, and further preferably 7 to 15 times as much as the mass of the water content in the cake. By washing the cake with water in an amount within the range described above, impurities, such as DOT or TMP, may be removed efficiently. The washing may be performed once or multiple times.

Note that the purity of spiro glycol and dioxane glycol may be measured with gel permeation chromatography (GPC). The GPC measurement may be performed using Shodex GPC System-21 (manufactured by SHOWA DENKO K.K.) as a measuring device equipped with two KF-801 columns, one KF-802.5 column and one KF-803F column that are connected in series. In addition, THF is used as a solvent, the flow rate is set to be 1.0 mL / min, and RI is used as a detector. Furthermore, a condition in which the sample concentration is 2 wt% and the injection volume is 100 µL is used.

### [Limiting Viscosity]

The limiting viscosity of the polyester resin according to the present embodiment may be measured, for example, in a mixed solvent of phenol and 1,1,2,2-tetrachloroethane (mass ratio, 6:4) at a temperature of 25°C. The limiting viscosity of the polyester resin measured in such a way is preferably 0.1 to 1.5 dL / g, more preferably 0.3 to 1.0 dL / g, further preferably 0.5 to 0.8 dL / g, and particularly preferably 0.55 to 0.75 dL / g.

### [Melt Viscosity]

The melt viscosity of the polyester resin according to the present embodiment may be measured, for example, at a measurement temperature of 240°C and a shear rate of 100 s⁻¹. The melt viscosity of the polyester resin measured in such a way is preferably 500 to 3000 Pa-s. By making the melt viscosity within the range described above, the mechanical strength and the formability tend to be further improved.

### [Impact Resistance]

The impact resistance of the polyester resin according to the present embodiment may be evaluated, for example, by performing a DuPont impact test on a sheet with 350 µmt obtained by the melt extrusion method. The value obtained through the DuPont impact test is preferably not less than 0.5 J, more preferably not less than 0.7 J, and further preferably not less than 0.9 J.

### [Method for Producing Polyester Resin]

A method for producing the polyester resin is not particularly limited, and conventionally known methods can be applied. Examples thereof include a melt polymerization method, such as a transesterification method and a direct esterification method, and a solution polymerization method. For the raw materials, it is preferable to use purified materials, as described above.

In each of the methods described above, known catalysts may be used. Examples of known catalysts include, but are not limited to, metallic magnesium, alkoxides of sodium and magnesium; a fatty acid salt, a carbonate, a hydroxide, a chloride and an oxide of zinc, lead, cerium, cadmium, manganese, cobalt, lithium, sodium, potassium, calcium, nickel, magnesium, vanadium, aluminum, tin, germanium, antimony, titanium and the like. Above all, compounds of manganese, titanium, antimony and germanium are preferred, and manganese acetate, titanium tetrabutoxide, antimony trioxide and germanium dioxide are particularly preferred. These catalysts may be used singly or two or more of them may be used in combination.

In each of the methods described above, known additives may be used, as needed. Examples of known additives include, but are not limited to, an etherification prevention agent, various stabilizers, such as a heat stabilizer and a photostabilizer, a polymerization modifier, an antistatic agent, a lubricant, an antioxidant, a mold releasing agent, and a basic compound.

Examples of etherification prevention agents include, but are not limited to, an amine compound.

Examples of heat stabilizers include, but are not limited to, a phosphorus compound. Above all, a phosphate ester is preferred, and triethyl phosphate is more preferred.

Examples of basic compounds include, but are not limited to, a carbonate, a hydroxide, a carboxylate, an oxide, a chloride or an alkoxide of an alkali metal, such as lithium, sodium and potassium. Above all, potassium acetate, sodium acetate and lithium acetate are particularly preferred.

### [Application]

The polyester resin according to the present embodiment may be used for various applications. For example, the polyester resin may be used for producing an injection molded article, an extrusion molded article such as a sheet, a film and a pipe, a bottle, an expanded article, an adhesive material, a bonding agent, a coating material, etc. To put it in further detail, the sheet may have either a single layer structure or a multilayer structure. The film may also have either a single layer structure or a multilayer structure, or may be either unstretched or monoaxially or biaxially stretched. Furthermore, the sheet or film may be laminated on a steel plate, etc. The bottle may be in the form of either a direct blow molded bottle, an injection blow molded bottle or an injection molded bottle. The expanded article may be in the form of either expanded beads or an extrusion-expanded article.

### Examples

Hereinafter, the present invention will be more specifically described using Examples; however, the scope of the present invention is not limited by these Examples.

### [Production Example 1: Preparation of Crude HPA Aqueous Solution]

To a reaction vessel, 1200 parts by mass of isobutyl aldehyde (manufactured by Mitsubishi Chemical Corporation) and 1514 parts by mass of 37 mass% formalin (manufactured by MITSUBISHI GAS CHEMICAL COMPANY, INC.) were charged. Seventy-six parts of triethylamine (Wako Pure Chemical Corporation, special grade reagent) was added over 5 minutes with stirring at a temperature of 40°C under the stream of nitrogen to perform an aldol condensation reaction. When the addition of triethylamine was completed, the temperature of the reaction liquid reached 65°C. From that point, the temperature of the reaction liquid was gradually raised, and it was set to be 90°C after 30 minutes. The reaction was continued for 50 minutes at the reaction liquid temperature of 90°C, and then the reaction liquid temperature was cooled to 60°C by external cooling, thereby stopping the reaction.

Then, from this reaction liquid, the low boiling fraction, such as unreacted isobutyl aldehyde and triethylamine, and methanol, was removed under a condition of a temperature of 70 to 80°C and a pressure of 40 kPa. The composition of the reaction product liquid after the distillation of the low boiling fraction (hereinafter, also referred to as the "crude HPA solution") was analyzed with gas chromatography (GC-6890N manufactured by Agilent Technologies, Inc.), and the results were shown below. Note that the measurement conditions were as follows.

### (Measurement conditions)

Measurement sample: prepared to be an approximately 1 mass% acetone solution
Column used: DB-1 (manufactured by Agilent Technologies, Inc.)
Analysis conditions: injection temp. 200°C detection temp. 250°C
Column temperature: retained at 60°C for 7 minutes, raised to 250°C at a rate of 6°C / min, and retained at 250°C for 20 minutes
Detector: hydrogen flame ionization detector (FID)

### (Measurement result)

| | |
|---|---|
| HPA 6 | 62.4 mass% |
| Isobutyl aldehyde | 0.26 mass% |
| Formaldehyde | 1.04 mass% |
| Triethylamine | 1.24 mass% |
| Neopentyl glycol | 0.82 mass% |
| Hydroxypivalic acid neopentyl glycol monoester | 1.05 mass% |
| Isobutyric acid neopentyl glycol monoester | 0.18 mass% |
| Water | 29.7 mass% |
| Formic acid | 0.40 mass% |
| Other | 2.91 mass% |

### [Production Example 2: Preparation of Purified HPA Aqueous Solution]

To a crystallization tank, 2000 parts by mass of the crude HPA aqueous solution obtained in Production Example 1 and 4000 parts by mass of water were charged such that the concentration of HPA was 20.8 mass%, and the tank was maintained at 60°C. The solution was naturally cooled to 40°C with stirring and held overnight to complete the crystallization. Thereafter, the whole amount of the slurry containing crystals of HPA was subject to solid-liquid separation with a centrifuge, and the resulting HPA crystals were washed using 640 parts by mass of water. The HPA crystals after washing were dried at a temperature of 30°C under the stream of nitrogen to obtain 560 parts by mass of HPA crystals. The recovery rate of the HPA crystals with respect to the crude HPA was 45.0%, and the analysis on the crystals using the gas chromatography described above showed that the HPA purity was 99.3%. Finally, water was added to the resulting HPA crystals to prepare a 60 mass% purified HPA aqueous solution.

### [Example 1]

### [Spiro Glycol Synthesis Using Purified HPA Aqueous Solution]

To a reaction vessel, 2912 parts by mass of water was charged, and 300 parts by mass of pentaerythritol and 23.6 parts by mass of 35% hydrochloric acid (manufactured by Wako Pure Chemical Corporation) were added. The reaction vessel was heated to 90°C, and 755.8 parts by mass of the 60 mass% purified HPA aqueous solution prepared in Production Example 2 was added dropwise over 4 hours. After completion of the dropping, the mixture was aged for 4 hours while keeping the temperature at 90°C. After completion of the aging, the reaction liquid was subject to solid-liquid separation to obtain a cake containing spiro glycol. The resulting cake was washed with 872 parts of water at 50°C and dried to obtain 591 parts by mass of spiro glycol. Note that the water content in the cake was 100 parts by mass, that was, the hot water used for the washing was 8.7 times as much as the amount of the water in the cake.

### [GPC Measurement of Spiro Glycol]

The spiro glycol obtained in Example 1 was dissolved at a concentration of 2 wt% in THF to prepare a sample for GPC measurement. The measurement was conducted using the following apparatus under a condition in which the injection volume of the sample for GPC measurement was 100µL. The retention time of spiro glycol was 33.7 minutes. GPC measurement results where the GPC chart area was defined to be 100 area% are shown in Table 1.

### (GPC apparatus configuration)

Apparatus: System 21 manufactured by SHOWA DENKO K.K. Column: KF-801 x 2, KF-802.5 x 1 and KF-803F x 1 Solvent: THF
Flow rate: 1.0mL / min
Detector: RI

### [Production of Polyester Resin (30 L scale)]

To a 30 liter polyester resin production apparatus equipped with a partial condenser, a total condenser, a cold trap, a stirrer with a torque detector, a heating device and a nitrogen inlet tube, 9446 g of dimethyl terephthalate, 6099 g of ethylene glycol, 7102 g of spiro glycol and 3.576 g of manganese acetate tetrahydrate were charged. The temperature of the apparatus was raised to 225°C, carrying out a transesterification reaction in a routine procedure. After the distillation amount of methanol produced via the transesterification reaction has reached 90% (2805g) of the theoretical amount, 0.709 g of antimony trioxide and 4.088 g of trimethyl phosphate were added. The pressure was reduced to 13.3 kPa over a period of 1 hour while keeping the temperature at 225°C, and then the temperature was increased to 270°C and the pressure was reduced to 130 Pa over an hour to carry out a polycondensation reaction. The stirring speed was gradually lowered from 100 rpm, and when the speed reached 10 rpm and the torque became 200 N·m, the reaction was finished to yield about 12 kg of the polyester resin.

### [Crosslinking Points in Polyester Resin]

To 0.1 g of the polyester resin obtained as described above, 5 mL of a 0.5 N pyridine / methanol solution was added. After sealing, the mixture was heated at 210°C for 4 hours to perform depolymerization. To the resulting depolymerized product, 5 mL of chloroform was added to obtain a solution for GC measurement. This solution for GC measurement was measured using the following apparatus and the amount of DOT was determined. The DOT amount based on the polyester resin was defined to be the amount of crosslinking points in the resin chain. Evaluation results are shown in Table 1.

### (GC apparatus configuration)

Apparatus: GC 353 manufactured by GL Sciences Inc.
Column: TC 17
Detector: FID

### [Evaluation of Mechanical Properties of Polyester Resin]

The polyester resin obtained as described above was supplied to a 30 mm twin-screw extruder with a vent, and extruded, while performing vent devolatilization, under a condition in which the cylinder temperature was 275°C and the screw speed was 150 rpm to produce a single layer sheet (350 µm thick) in a T-die extrusion method. The 50% failure energy (J) of the resulting single layer sheet was measured using a DuPont drop impact testing machine manufactured by MYS-TESTER Company Limited. Specifically, by dropping the punch onto the single layer sheet under a condition in which the punch shape was ϕ 1/4 inch, the 50% failure energy was determined in accordance with JIS K7211-1. Evaluation results are shown in Table 1.

**[Table 1]**

| | Example 1 | Example 2 | Comparative Example 1 | Comparative Example 2 |
|---|---|---|---|---|
| [GPC measurement of spiro glycol] | | | | |
| DOT (area%) | 0.05 | 0.07 | 0.09 | 0.08 |
| di-PE-HPA-HPA (area%) | 0.11 | 0.53 | 0.89 | 0.74 |
| tri-PE-HPA-HPA-HPA (area%) | 0.10 | 0.25 | 0.37 | 0.36 |
| tetra-PE-HPA-HPA-HPA-HPA (area%) | 0.00 | 0.00 | 0.00 | 0.00 |
| Total impurities with 3 or more functionalities (area%) | 0.26 | 0.85 | 1.35 | 1.18 |
| SPG (area%) | 99.48 | 98.07 | 96.16 | 96.84 |

| [Evaluation of Polyester Resin] | | | | |
|---|---|---|---|---|
| Crosslinking points (wt%) | 0.5 | 0.9 | 1.4 | 1.2 |
| 50% failure energy (J) | 1.0 | 0.9 | 0.1 | 0.6 |

### [Comparative Example 1]

### [Spiro Glycol Synthesis Using Crude HPA]

To a reaction vessel, 349.9 parts by mass of heptane (manufactured by Wako Pure Chemical Corporation) and 75.0 parts by mass of pentaerythritol were added and suspended. Then the temperature was raised to 60°C. To the reaction vessel, 186.3 parts by mass of the crude HPA aqueous solution prepared in Production Example 1 and 22.7 parts by mass of 25% nitric acid (manufactured by Wako Pure Chemical Corporation) were added over a period of about 2 hours. Then, the mixture was aged for 4 hours while maintaining the temperature. After completion of the aging, the reaction liquid was subject to solid-liquid separation to obtain crystals of spiro glycol. The resulting cake of spiro glycol was washed with 149.1 parts by mass of water at normal temperature and 155.4 parts by mass of heptane, and dried to obtain 113.0 parts by mass of spiro glycol. Note that the water content in the cake was 71.6 parts by mass, that was, the water at normal temperature used for the washing was 2.1 times as much as the amount of the water in the cake.

The GPC measurement of spiro glycol, as well as the production and evaluation of the polyester resin, was conducted in the same manner as Example 1. Results are shown in Table 1.

### [Example 2]

The spiro glycols synthesized in Example 1 and Comparative Example 1 were mixed in a weight ratio of 5:5, and the GPC measurement of spiro glycol, as well as the production and evaluation of the polyester resin, was conducted in the same manner as Example 1. Results are shown in Table 1.

### [Comparative Example 2]

The spiro glycols synthesized in Example 1 and Comparative Example 1 were mixed in a weight ratio of 2:8, and the GPC measurement of spiro glycol, as well as the production and evaluation of the polyester resin, was conducted in the same manner as Example 1. Results are shown in Table 1.

The present application is based on Japanese Patent Application (Japanese Patent Application No. 2016-050879) filed with Japan Patent Office on March 15, 2016, the contents of which were hereby incorporated by reference.

### Industrial Applicability

The diol having a cyclic acetal skeleton of the present invention can be suitably used as a resin material since the content of DOT and TMP is not more than a certain amount. In particular, polyester resins obtained by copolymerizing the diol are stably excellent in mechanical properties, and can be widely utilized in various fields, such as the field of electrical and electronic equipment including office automation appliances, information and communication devices and home electric appliances, the automotive field, the food field and the architecture field.

## Claims

1. A polyester resin comprising a diol structural unit and a dicarboxylic acid structural unit, wherein:
the diol structural unit comprises a structural unit derived from a diol having a cyclic acetal skeleton represented by Formula (1) and/or Formula (2) below;
a content of the structural unit derived from the diol having the cyclic acetal skeleton is 1 to 80 mol% based on the total amount of the diol structural unit; and
an amount of crosslinking points in the resin chain is 1.0 wt% or less, wherein the crosslinking points refer to a sum of a mass of structural unit derived from dioxane triol, which is produced by the reaction of one hydroxypivalaldehyde with pentaerythritol, and a mass of structural unit derived from trimethylolpropane, with respect to the total amount of the polyester resin; 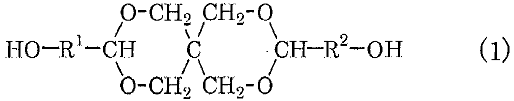
wherein R¹ and R² each independently represent an organic group selected from the group consisting of aliphatic groups having 1 to 10 carbon atoms, alicyclic groups having 3 to 10 carbon atoms, and aromatic groups having 6 to 10 carbon atoms, and 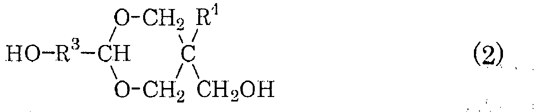
wherein R³ and R⁴ each independently represent an organic group selected from the group consisting of aliphatic groups having 1 to 10 carbon atoms, alicyclic groups having 3 to 10 carbon atoms, and aromatic groups having 6 to 10 carbon atoms.

2. The polyester resin according to claim 1, wherein the diol having the cyclic acetal skeleton is 3,9-bis(1,1-dimethyl-2-hydroxyethyl)-2,4,8,10-tetraoxaspiro[5.5]undecane or 5-methylol-5-ethyl-2-(1,1-dimethyl-2-hydroxyethyl)-1,3-dioxane.

## Patentansprüche

1. Ein Polyesterharz, umfassend eine Diol-Struktureinheit und eine Dicarbonsäure-Struktureinheit, wobei:
die Diol-Struktureinheit eine Struktureinheit umfasst, die von einem Diol mit einem cyclischen Acetalgerüst abgeleitet ist, dargestellt durch nachstehende Formel (1) und/oder Formel (2);
ein Gehalt der Struktureinheit, die von dem Diol mit dem cyclischen Acetalgerüst abgeleitet ist, 1 bis 80 Mol-%, bezogen auf die Gesamtmenge der Diol-Struktureinheit, beträgt, und
eine Menge an Vernetzungspunkten in der Harzkette 1,0 Gew.-% oder weniger beträgt, wobei sich die Vernetzungspunkte auf eine Summe einer Masse einer Struktureinheit, die von Dioxantriol abgeleitet ist, das durch die Reaktion eines Hydroxypivalaldehyds mit Pentaerythrit hergestellt wird, und einer Masse einer Struktureinheit, die von Trimethylolpropan abgeleitet ist, bezogen auf die Gesamtmenge des Polyesterharzes, beziehen; 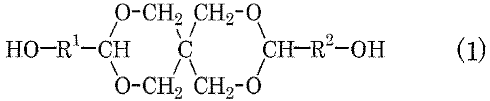
wobei R¹ und R² jeweils unabhängig eine organische Gruppe darstellen, ausgewählt aus der Gruppe bestehend aus aliphatischen Gruppen mit 1 bis 10 Kohlenstoffatomen, alicyclischen Gruppen mit 3 bis 10 Kohlenstoffatomen und aromatischen Gruppen mit 6 bis 10 Kohlenstoffatomen, und 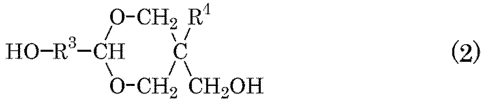
wobei R³ und R⁴ jeweils unabhängig eine organische Gruppe darstellen, ausgewählt aus der Gruppe bestehend aus aliphatischen Gruppen mit 1 bis 10 Kohlenstoffatomen, alicyclischen Gruppen mit 3 bis 10 Kohlenstoffatomen und aromatischen Gruppen mit 6 bis 10 Kohlenstoffatomen.

2. Das Polyesterharz gemäß Anspruch 1, wobei das Diol mit dem cyclischen Acetalgerüst 3,9-bis(1,1-Dimethyl-2-hydroxyethyl)-2,4,8,10-tetraoxaspiro[5.5]undecan oder 5-Methylol-5-ethyl-2-(1,1-dimethyl-2-hydroxyethyl)-1,3-dioxan ist.

## Revendications

1. Résine de polyester comprenant un motif structurel diol et un motif structurel acide dicarboxylique, dans laquelle :
le motif structurel diol comprend un motif structurel dérivé d'un diol ayant un squelette d'acétal cyclique représenté par la formule (1) et/ou la formule (2) ci-dessous ;
la teneur en le motif structurel dérivé du diol ayant le squelette d'acétal cyclique est de 1 à 80 % en moles par rapport à la quantité totale du motif structurel diol ; et
la quantité de points de réticulation dans la chaîne de résine est de 1,0 % en poids ou moins, lesquels points de réticulation se réfèrent à la somme de la masse du motif structurel dérivé de dioxane triol, qui est produit par la réaction d'une hydroxypivalaldéhyde avec du pentaérythritol, et de la masse du motif structurel dérivé de triméthylolpropane, par rapport à la quantité totale de la résine de polyester ; 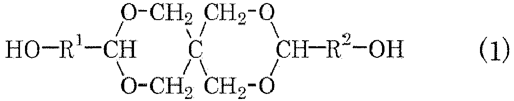
dans lequel chacun de R¹ et R² représente indépendamment un groupe organique choisi dans l'ensemble constitué par les groupes aliphatiques ayant 1 à 10 atomes de carbone, les groupes alicycliques ayant 3 à 10 atomes de carbone, et les groupes aromatiques ayant 6 à 10 atomes de carbone, et 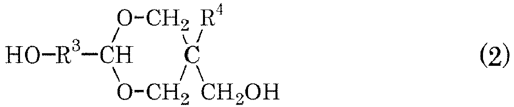
dans lequel chacun de R³ et R⁴ représente indépendamment un groupe organique choisi dans l'ensemble constitué par les groupes aliphatiques ayant 1 à 10 atomes de carbone, les groupes alicycliques ayant 3 à 10 atomes de carbone, et les groupes aromatiques ayant 6 à 10 atomes de carbone.

2. Résine de polyester selon la revendication 1, dans laquelle le diol ayant le squelette d'acétal cyclique est le 3,9-bis(1,1-diméthyl-2-hydroxyéthyl)-2,4,8,10-tétraoxaspiro[5.5]undécane ou le 5-méthylol-5-éthyl-2-(1,1-diméthyl-2-hydroxyéthyl)-1,3-dioxane.
